# FASCICULE DE BREVET EUROPEEN

(11) **EP 3 724 459 B1**
(45) Date de publication et mention de la délivrance du brevet: **12.06.2024**
(21) Numéro de dépôt: 18825862.8
(22) Date de dépôt: 14.11.2018
(51) Int. Cl.: F01K 7/16, F01K 25/08

(54) **ENSEMBLE DE TURBOPOMPE ÉLECTRIFIÉE POUR UN CIRCUIT FERMÉ, EN PARTICULIER DE TYPE A CYCLE DE RANKINE, COMPORTANT UN REFROIDISSEMENT INTEGRÉ**
ELEKTRISCH ANGETRIEBENE TURBOPUMPENANORDNUNG FÜR EINEN GESCHLOSSENEN KREISLAUF, INSBESONDERE VOM RANKINETYP, MIT INTEGRIERTER KÜHLUNG
ELECTRICALLY POWERED TURBOPUMP ASSEMBLY FOR A CLOSED CIRCUIT, PARTICULARLY OF THE RANKINE CYCLE TYPE, COMPRISING INTEGRATED COOLING

(30) Priorité: 15.12.2017 FR 1762242
(43) Date de publication de la demande: 21.10.2020
(73) Titulaire: IFP Energies nouvelles, 92852 Rueil-Malmaison (FR); Enogia, 13015 Marseille (FR)
(72) Inventeur: SMAGUE, Pascal, 92500 Rueil-Malmaison (FR); PAGNIER, Philippe, 38370 Saint Clair du Rhone (FR); LEDUC, Pierre, 78650 Beynes (FR); HENRY, Gabriel, 13760 Saint-Cannat (FR); LEROUX, Arthur, 13001 Marseille (FR)
(74) Mandataire: IFP Energies nouvelles
(86) Numéro de dépôt international: PCT/EP2018/081173
(87) Numéro de publication internationale: WO 2019/115122

(56) Documents cités:
- WO-A1-2015/052374
- US-A- 3 219 831
- US-A- 4 362 020
- US-A1- 2011 271 677
- US-A1- 2015 318 763

## Description

La présente invention se rapporte à un ensemble de turbopompe cinétique pour un circuit fermé, en particulier de type à cycle de Rankine, associé à un moteur à combustion interne, notamment pour véhicule automobile ou pour un véhicule poids lourd. Plus précisément, la turbopompe est mécaniquement liée à un rotor d'une machine électrique.

Par turbopompe cinétique il est entendu, un ensemble formé par une pompe centrifuge et une turbine rotodynamique.

La pompe a la particularité selon laquelle son rotor porte une multiplicité d'ailettes radiales pour former un impulseur dont l'effet est la mise en rotation et l'accélération du fluide en condition liquide. Par l'effet de la rotation de l'impulseur de la pompe, le fluide est aspiré axialement, puis accéléré radialement et refoulé par la volute, ou par un diffuseur, que comporte habituellement une turbopompe. La turbine peut être une turbine cinétique, en particulier une turbine axiale à action. Dans ce cas, la turbine, qui est raccordée à la pompe sur le même arbre, peut être constituée d'une partie statorique disposant d'un aubage fixe appelé injecteur visant à convertir la pression du fluide en condition vapeur en énergie cinétique. Cette énergie cinétique est alors convertie en énergie mécanique au travers d'un aubage mobile de la partie rotorique de la turbine. Les aubages de la turbine sont constitués d'ailettes permettant la détente du fluide qui est évacué par la volute de sortie de la turbine.

Les aubages de la turbine peuvent être à profil radial ou axial. De préférence, les aubages de la turbine sont à profil radial.

Comme cela est largement connu, un cycle de Rankine est un cycle thermodynamique par lequel de la chaleur provenant d'une source de chaleur externe est transmise à un circuit fermé qui contient un fluide de travail. Au cours du cycle, le fluide de travail subit des changements de phase (liquide/vapeur).

Ce type de cycle se décompose généralement en une étape durant laquelle le fluide de travail utilisé sous forme liquide, est comprimé de manière isentropique, suivie d'une étape où ce fluide liquide comprimé est chauffé et vaporisé au contact d'une source de chaleur.

Cette vapeur est ensuite détendue, au cours d'une autre étape, dans une machine de détente, puis, dans une dernière étape, cette vapeur détendue est refroidie et condensée au contact d'une source froide.

Pour réaliser ces différentes étapes, le circuit comprend au moins une pompe pour faire circuler et comprimer le fluide sous forme liquide, un échangeur-évaporateur qui est balayé par un fluide chaud pour réaliser la vaporisation au moins partielle du fluide comprimé, une machine de détente pour détendre la vapeur, telle qu'une turbine, qui transforme l'énergie de cette vapeur en une autre énergie, comme une énergie mécanique ou électrique, et un échangeur-condenseur grâce auquel la chaleur contenue dans la vapeur est cédée à une source froide, généralement de l'air extérieur, ou encore un circuit d'eau de refroidissement, qui balaye ce condenseur, pour transformer cette vapeur en un fluide sous forme liquide.

Dans ce type de circuit, le fluide utilisé est généralement de l'eau mais d'autres types de fluides, par exemple des fluides organiques ou des mélanges de fluides organiques, peuvent également être utilisés. Le cycle est alors appelé Cycle de Rankine Organique ou ORC (Organic Rankine Cycle).

A titre d'exemple, les fluides de travail peuvent être du butane, de l'éthanol, des hydrofluorocarbures, de l'ammoniac, du dioxyde de carbone...

Comme cela est bien connu, le fluide chaud pour réaliser la vaporisation du fluide comprimé peut provenir de sources chaudes variées, telles qu'un liquide de refroidissement (d'un moteur à combustion, d'un processus industriel, d'un four, etc.), des gaz chauds résultant d'une combustion (fumées d'un processus industriel, d'une chaudière, gaz d'échappement d'un moteur à combustion ou d'une turbine, etc.), d'un flux de chaleur issu de capteurs solaires thermiques, etc.

Généralement et comme mieux décrit dans le document WO 2013/046885, la pompe et la turbine peuvent être combinées en une seule pièce pour former une turbopompe de faible encombrement.

L'arbre de cette turbopompe, qui est commun à la pompe et à la turbine, est souvent couplé à une motorisation, soit le moteur thermique, soit une machine électrique adaptée à fournir ou à convertir de l'énergie.

Les documents WO2015/052374A1, US2011/271677A1, US2015/318763A1, US4362020A et US3219831 A montrent des ensembles de turbopompe selon l'état de la technique.

La présente invention se propose de perfectionner une turbopompe électrifiée de façon à optimiser l'utilisation d'un circuit fermé à cycle de Rankine.

A cet effet, la présente invention concerne un ensemble de turbopompe selon la revendication 1.

Ladite zone de refroidissement peut être située circonférentiellement autour du stator.

Ladite zone de refroidissement peut comporter des conduits en serpentins autour du stator.

Ladite zone de refroidissement peut comporter au moins un plot de turbulence.

Ladite zone de refroidissement peut comporter au moins un canal fin.

Ladite pompe peut comporter une roue de mise en pression et un collecteur pour mettre en circulation le fluide de travail dans la zone de refroidissement tout en minimisant les pertes de charge associées à son passage.

Les autres caractéristiques et avantages de l'invention vont apparaître à la lecture de la description qui va suivre, donnée à titre uniquement illustratif et non limitatif, et à laquelle sont annexées :
- la figure 1 qui montre schématiquement un circuit hydraulique d'un cycle Rankine dans lequel est intégré une turbopompe électrifiée selon l'invention et,
- la figure 2 qui est une vue en coupe plus précise de la pompe et de la circulation du fluide de refroidissement à l'intérieur de la zone de refroidissement.

Pour l'application transport routier (véhicule léger et poids lourd), afin de limiter les coûts de la solution ORC, une possibilité consiste pour les solutions de récupération par cycle de Rankine à proposer une turbopompe électrifiée intégrée disposant ainsi, en un même composant et sur le même arbre, d'une pompe, d'une machine de détente, et d'une machine électrique.

Généralement le refroidissement d'une machine électrique, nécessaire à l'évacuation des calories produites par les pertes Joule dans celle-ci, est réalisé via un refroidissement externe avec un fluide caloporteur (eau, huile, fluide de travail...).

Selon la présente invention, pour réduire encore davantage les coûts et améliorer l'intégration du composant turbopompe, il est proposé de dériver le fluide de travail sous pression sortant de la pompe vers le carter de la machine électrique afin de réaliser son refroidissement.

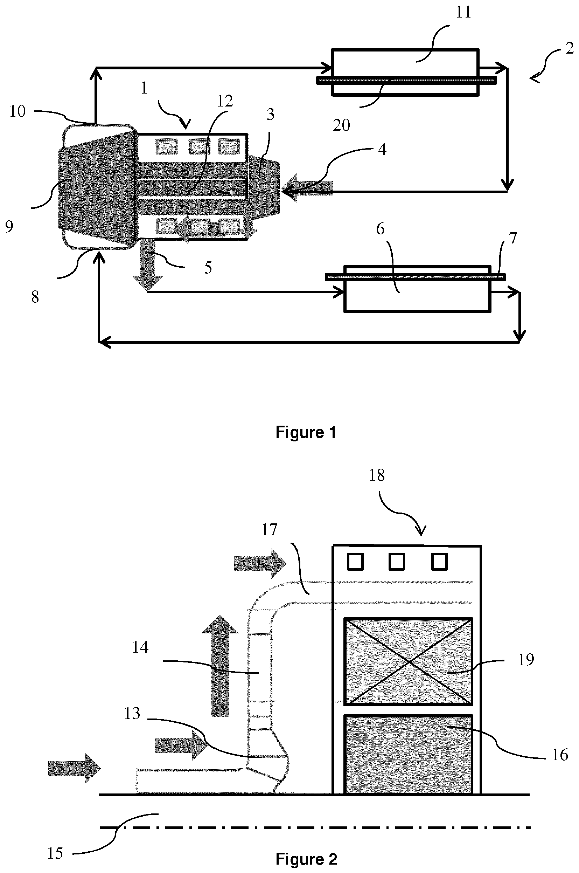

La figure 1 montre une turbopompe électrifiée 1 qui fait partie du circuit fermé à cycle de Rankine 2 qui est avantageusement de type ORC (Organic Rankine Cycle) et qui utilise un fluide de travail organique ou des mélanges de fluides organiques, comme du butane, de l'éthanol, des hydrofluorocarbures.

Il est bien entendu que le circuit fermé peut également fonctionner avec un fluide comme de l'ammoniac, de l'eau, du dioxyde de carbone...

La section de la turbopompe 1 comprend une pompe 3 munie d'une entrée 4 du fluide de travail sous forme liquide et d'une sortie 5 de ce fluide de travail également sous forme liquide mais comprimé sous une pression élevée.

La sortie 5 de la pompe est reliée à un échangeur de chaleur 6, dénommé évaporateur, traversé par le fluide de travail comprimé et grâce auquel le fluide de travail ressort de cet évaporateur sous forme de vapeur comprimée.

Cet évaporateur 6 est également parcouru par une source chaude 7, sous forme liquide ou gazeuse de manière à pouvoir céder sa chaleur au fluide de travail. Cette source chaude peut par exemple provenir des gaz d'échappement ou d'une autre source de chaleur d'un moteur à combustion interne.

La sortie de l'évaporateur est connectée à l'entrée 8 de la section de la turbopompe comprenant la turbine 9 pour y faire admettre le fluide de travail sous forme de vapeur comprimée à haute pression, ce fluide ressortant par la sortie 10 de cette turbine sous forme de vapeur détendue à basse pression.

La sortie 10 de la turbine 9 est raccordée à un échangeur de refroidissement 11, ou condenseur, qui permet de transformer la vapeur basse pression détendue qu'il reçoit en un fluide liquide basse pression. Ce condenseur est balayé par une source froide 20, généralement un flux d'air ambiant ou d'eau de refroidissement, de manière à refroidir la vapeur détendue pour qu'elle se condense et se transforme en un liquide.

La pompe et la turbine sont sur le même arbre. Selon d'autres exemples qui ne sont pas couvertes par l'invention, ils peuvent être sur des arbres distincts reliés mécaniquement avec un rapport de réduction et raccordés à l'arbre du rotor de la machine électrique 12. La machine électrique 12 est, soit motrice pour démarrer le cycle, soit génératrice d'électricité lorsque le cycle est moteur.

Bien entendu, les différents éléments du circuit sont reliés entre eux par des conduites de circulation de fluide.

Pour réduire encore davantage les coûts et améliorer l'intégration du composant turbopompe électrifiée, il est proposé de dériver le fluide comprimé sortant de la pompe vers le carter de la machine électrique afin de réaliser son refroidissement. Traditionnellement le refroidissement d'une machine électrique, nécessaire à l'évacuation des calories produites par les pertes Joule de celle-ci, est réalisé via un refroidissement externe avec un fluide caloporteur (air, eau, huile). Cette configuration nécessite un piquage d'entrée et de sortie sur le corps de la turbopompe en partie centrale proche de la machine électrique ainsi qu'un dispositif externe de mise en circulation du fluide de refroidissement comprenant une pompe, un réservoir, et des conduits.

Dans la présente invention, le refroidissement est réalisé par une circulation interne à la turbopompe du fluide pressurisé par la pompe. En d'autres termes, le fluide de travail pressurisé par la pompe (c'est-à-dire en sortie de la pompe) circule directement, sans sortir de la turbopompe dans la zone de refroidissement.

En outre, la totalité du fluide de travail réalise le refroidissement de la machine électrique. Le fluide comprimé en sortant de la pompe est orienté vers la partie centrale de la turbopompe, où se situe le stator de la machine électrique, au moyen d'un diffuseur localisé sur la pompe. Un espace libre entourant la partie statorique de la machine électrique joue le rôle d'un échangeur de chaleur et permet de refroidir celle-ci. Après circulation, le fluide ressort de la turbopompe (sortie 5) pour être dirigé par un conduit vers l'évaporateur 6 du cycle de Rankine.

D'un point de vue architecture, cette solution permet de supprimer les éléments externes dédiés à la fonction de refroidissement et de simplifier le système Rankine. Ainsi, l'intégralité du fluide de travail comprimé sortant de la pompe est mis en circulation au sein de la zone de refroidissement centrale de la machine électrique.

L'intérêt d'une telle configuration est multiple :
- Simplification des interfaces de la turbogénératrice électrique avec son environnement extérieur ;
- Réduction du coût de la fonction turbogénératrice par la suppression de composants externes dédiés au refroidissement de celle-ci ;
- Gain de place pour le système ORC compte tenu de l'internalisation de la fonction refroidissement dans la turbopompe ;
- Simplification du contrôle du système Rankine grâce à l'utilisation d'un système de refroidissement passif et sans nécessiter de contrôle.

La figure 2 montre schématiquement et partiellement la pompe et la machine électrique. Le fluide de travail pénètre dans la roue 13 de la pompe cinétique par le centre pour être comprimé par la vitesse de rotation et être envoyé radialement dans un diffuseur 14.

La roue 13 est mécaniquement liée à l'arbre 15 du rotor 16 de la machine électrique.

Un collecteur 17 conduit le fluide sous pression dans une zone de refroidissement 18 à l'extérieur du stator 19 (circonférentiellement autour du stator) de la machine électrique.

La zone de refroidissement peut comporter des conduits en serpentins entourant circonférentiellement le stator. La construction de la zone de circulation fait l'objet d'une optimisation afin de limiter les pertes de charge dues au fluide, tout en assurant un refroidissement efficace de la machine électrique. De plus, cette configuration permet d'homogénéiser les débits de fluide qui refroidissent le stator.

De plus la zone de refroidissement 18 peut comporter au moins un plot de turbulence (non représenté), afin d'homogénéiser les débits de fluide qui refroidissent le stator.

En outre, la zone de refroidissement 18 peut comporter au moins un canal fin (non représenté), c'est-à-dire de section moins importante que le reste des conduits.

Dans la phase de démarrage du circuit fermé, la machine électrique est motrice pour réaliser l'amorçage de la pompe 3 de la turbopompe 1. Pour ce faire, la machine électrique est alimentée en énergie électrique.

Dans une des phases de fonctionnement du circuit, la turbine produit de l'énergie qu'elle transmet à la machine électrique qui fonctionne alors en génératrice, lorsque cette turbine produit davantage de puissance que la consommation de la pompe.

Dès que la puissance transmise devient insuffisante, c'est-à-dire que la turbine produit moins de puissance que la pompe n'en consomme, la turbopompe est rendue inopérante électriquement.

Un mode de réalisation concerne également un circuit fermé de type à cycle de Rankine, dans lequel circule un fluide de travail, comprenant une pompe, un évaporateur, une turbine et un condenseur. Selon ce mode, la pompe et la turbine forme un ensemble de turbopompe cinétique selon l'une quelconque des combinaisons de variantes décrites ci-dessus. Le circuit fermé peut être conforme à celui de la figure 1.

Selon un mode de réalisation, le circuit fermé peut comprendre un réservoir du fluide de travail.

Ainsi, le fluide de travail circule consécutivement dans la pompe, dans la machine électrique, dans l'évaporateur, dans la turbine et dans le condenseur avant de retourner dans la pompe. Optionnellement, entre deux éléments du cycle de Rankine, le fluide peut être stocké dans un réservoir de fluide de travail.

La turbopompe électrifiée permet notamment de réduire l'encombrement du circuit fermé, et de simplifier le contrôle du circuit fermé.

## Revendications

1. Ensemble de turbopompe cinétique (1) pour la circulation d'un fluide de travail dans un circuit fermé, en particulier de type à cycle de Rankine, associé à une machine électrique tournante (12) comportant un rotor (16) et un stator (19), la turbopompe cinétique (1) étant une turbopompe électrifiée intégrée disposant en un même composant et sur un même arbre, d'une pompe (3), d'une turbine et ladite machine électrique, ledit rotor (16) étant mécaniquement lié en rotation à l'arbre de ladite turbopompe, **caractérisé en ce que** ladite machine électrique (12) comporte une zone de refroidissement (18) configurée pour que la totalité dudit fluide de travail sous pression y circule en sortie de ladite pompe au moyen d'une circulation interne à la turbopompe et **en ce que** la turbopompe comprend un diffuseur localisé sur la pompe pour orienter le fluide comprimé sortant de la pompe vers la partie centrale de la turbopompe où se trouve le stator de la machine électrique, de manière à réaliser la circulation interne à la turbopompe dans la zone de refroidissement, sans sortir de la turbopompe.

2. Ensemble selon la revendication 1, dans lequel ladite zone de refroidissement (18) est située circonférentiellement autour du stator (19).

3. Ensemble selon l'une des revendications précédentes, dans lequel ladite zone de refroidissement (18) comporte des conduits en serpentins autour du stator (19).

4. Ensemble selon l'une des revendications précédentes, dans lequel ladite zone de refroidissement (18) comporte au moins un plot de turbulence.

5. Ensemble selon l'une des revendications précédentes, dans lequel ladite zone de refroidissement (18) comporte au moins un canal fin.

6. Ensemble selon l'une des revendications précédentes, dans lequel ladite pompe (3) comporte une roue (13) de mise en pression, ledit diffuseur (14) et un collecteur (17) pour mettre en circulation le fluide de travail dans la zone de refroidissement (18).

## Patentansprüche

1. Anordnung einer kinetischen Turbopumpe (1) für die Zirkulation eines Arbeitsmediums in einem geschlossenen Kreislauf, insbesondere vom Typ mit Rankine-Kreisprozess, die mit einer drehenden elektrischen Maschine (12) kombiniert ist, die einen Rotor (16) und einen Stator (19) umfasst, wobei die kinetische Turbopumpe (1) eine integrierte elektrifizierte Turbopumpe ist, die in einem selben Bauteil und auf einer selben Welle über eine Pumpe (3), eine Turbine und die elektrische Maschine verfügt, wobei der Rotor (16) mit der Welle der Turbopumpe mechanisch drehfest verbunden ist, **dadurch gekennzeichnet, dass** die elektrische Maschine (12) einen Kühlbereich (18) umfasst, der so ausgestaltet ist, dass das gesamte unter Druck stehende Arbeitsmedium beim Austreten aus der Pumpe mittels einer turbopumpeninternen Zirkulation darin zirkuliert, und dadurch, dass die Turbopumpe einen Diffusor aufweist, der an der Pumpe angeordnet ist, um das aus der Pumpe austretende verdichtete Medium zu dem zentralen Teil der Turbopumpe hin auszurichten, in dem sich der Stator der elektrischen Maschine befindet, so dass die turbopumpeninterne Zirkulation in dem Kühlbereich ausgeführt wird, ohne aus der Turbopumpe auszutreten.

2. Anordnung nach Anspruch 1, bei welcher der Kühlbereich (18) umfänglich um den Stator (19) herum gelegen ist.

3. Anordnung nach einem der vorhergehenden Ansprüche, bei welcher der Kühlbereich (18) schlangenförmige Leitungen um den Stator (19) herum umfasst.

4. Anordnung nach einem der vorhergehenden Ansprüche, bei welcher der Kühlbereich (18) mindestens ein Verwirbelungselement umfasst.

5. Anordnung nach einem der vorhergehenden Ansprüche, bei welcher der Kühlbereich (18) mindestens einen dünnen Kanal umfasst.

6. Anordnung nach einem der vorhergehenden Ansprüche, bei welcher die Pumpe (3) ein Druckaufbaurad (13), den Diffusor (14) und einen Sammler (17) umfasst, um das Arbeitsmedium in dem Kühlbereich (18) in Zirkulation zu versetzen.

## Claims

1. Kinetic turbopump assembly (1) for circulating a working fluid in a closed circuit, in particular of the Rankine cycle type, associated with a rotary electric machine (12) comprising a rotor (16) and a stator (19), the kinetic turbopump (1) being an integrated electrified turbopump which provides, in a single component and on a single shaft, a pump (3), a turbine and said electric machine, said rotor (16) being mechanically linked in rotation to the shaft of said turbopump, **characterized in that** said electric machine (12) comprises a cooling zone (18) configured such that all of said working fluid under pressure circulates therein at the outlet of said pump by means of circulation within the turbopump, and **in that** the turbopump comprises a diffuser positioned on the pump in order to orient the compressed fluid leaving the pump towards the central part of the turbopump, where the stator of the electric machine is located, so as to implement the circulation within the turbopump in the cooling zone, without leaving the turbopump.

2. Assembly according to Claim 1, wherein said cooling zone (18) is located circumferentially around the stator (19) .

3. Assembly according to either of the preceding claims, wherein said cooling zone (18) comprises serpentine ducts around the stator (19).

4. Assembly according to one of the preceding claims, wherein said cooling zone (18) comprises at least one turbulence tab.

5. Assembly according to one of the preceding claims, wherein said cooling zone (18) comprises at least one fine channel.

6. Assembly according to one of the preceding claims, wherein said pump (3) comprises a pressurizing wheel (13), said diffuser (14) and a manifold (17) for circulating the working fluid in the cooling zone (18).
